# EUROPÄISCHE PATENTSCHRIFT

(11) **EP 1 753 914 B1**
(45) Veröffentlichungstag und Bekanntmachung des Hinweises auf die Patenterteilung: **14.08.2013**
(21) Anmeldenummer: 05747981.8
(22) Anmeldetag: 19.05.2005
(51) Int. Cl.: D21H 21/14

(54) **VERFAHREN ZUR HERSTELLUNG VON GEKREPPTEM PAPIER**
METHOD FOR PRODUCING CREPED PAPER
PROCEDE DE PRODUCTION DE PAPIER CREPE

(30) Priorität: 24.05.2004 DE 102004025861
(43) Veröffentlichungstag der Anmeldung: 21.02.2007
(73) Patentinhaber: BASF SE, 67056 Ludwigshafen (DE)
(72) Erfinder: LINHART, Friedrich, 69123 Heidelberg (DE); ESSER, Anton, 67117 Limburgerhof (DE); KANNENGIESSER, Detlef, 64673 Zwingenberg (DE)
(74) Vertreter: Peatfield, Jeremy William
(86) Internationale Anmeldenummer: PCT/EP2005/005434
(87) Internationale Veröffentlichungsnummer: WO 2005/116334

(56) Entgegenhaltungen:
- EP-A- 0 074 558
- EP-A- 0 856 083
- WO-A-00/39396
- WO-A-94/12560
- WO-A-98/50630
- DE-A1- 2 436 386
- US-A- 5 980 690

## Beschreibung

Die Erfindung betrifft ein Verfahren zur Herstellung von gekrepptem Papier durch Ankleben einer feuchten Papierbahn mit Hilfe eines organischen synthetischen Polymeren als Haftmittel an den Kreppzylinder, Stauchen und Abnehmen des gekreppten Papiers vom Kreppzylinder.

Papiere, die für Reinigungszwecke oder zum Abtrocknen verwendet werden wie Handtücher, Servietten, Taschentücher, Toilettenpapier und technische Putztücher, müssen weich und flexibel sein, sich Unebenheiten anpassen und Flüssigkeiten durch großflächiges Anlegen schnell aufnehmen können. Die dafür erforderliche Weichheit des Papiers erhält man entweder durch Auswahl geeigneter Fasern, durch Behandlung des Papiers mit mechanischen Mitteln oder durch geeignete Papierherstellungsverfahren.

Ein bewährtes mechanisches Mittel zum Weichmachen von Papierprodukten ist die Kreppung. Dabei wird, meistens im Zuge der Herstellung des Papiers, die nasse Papierbahn zur Trocknung auf einen großen polierten Trockenzylinder, den sogenannten Kreppzylinder, aufgeführt, wobei sie mit Hilfe eines Krepphilfsmittels oder einer Mischung desselben leicht angeklebt wird. Bei moderneren Verfahren, z.B. dem TAD-Verfahren (Through Air Drying), wird die bereits trockene Papierbahn auf den polierten Metallzylinder aufgeführt und durch ein Krepphilfsmittel oder eine Mischung, die ein solches enthält, leicht angeklebt. An einer bestimmten Stelle wird eine scharfe Klinge oder Kante, ein sogenannter Schaber an den Trockenzylinder gepresst. Hier wird die Papierbahn gestaucht, von dem Zylinder abgehoben und unter verringertem Zug und mit verminderter Geschwindigkeit zur Aufrollung weitergeführt. Diese Stauchung verleiht dem Papier je nach gewünschtem Ausmaß Querfalten gewünschter Größe, die sogenannte Kreppung. Dadurch wird die Steifigkeit des Papiers verringert und die gewünschte Weichheit des Papiers eingestellt

Das Kreppen des Papiers erfolgt meistens im Papierherstellungsprozeß. Es ist jedoch auch möglich, ein bereits trockenes Papier zu kreppen. Die Kreppung kann daher auch unabhängig von der Papierherstellung durchgeführt werden, indem man es beispielsweise mit einer wässrigen Lösung eines geeigneten Klebemittels befeuchtet.

Eine problemlose und optimale Kreppung hängt von verschiedenen Faktoren ab wie den Eigenschaften des Papierstoffs, z. B. den darin verwendeten Chemikalien und der Oberflächenladung der Fasern, von der Oberfläche und der Temperatur des Kreppzylinders, von der Maschinengeschwindigkeit, von der Schärfe und dem Anstellwinkel des Schabers. Die Kreppung verlangt von den Papiermachern ein sehr hohes Maß an Erfahrung. Insbesondere muß es gelingen, das Papier auf dem Trockenzylinder so anzukleben, daß es bei den hohen Maschinengeschwindigkeiten nicht durch die Zentrifugalkraft wegfliegt, daß es nicht ohne gestaucht zu werden vom Schaber abgehoben wird und daß es andererseits nicht zu fest auf dem Trockenzylinder klebt und darum vom Schaber nicht unversehrt und sauber vom Zylinder abgenommen werden kann.
Zudem darf das Haftmittel keinen harten, spröden und festhaftenden Belag bilden, der die Glätte des polierten Zylinders beeinträchtigt und Markierungen auf dem Papier hinterläßt. Der Belag soll flexibel sein, sich mit dem Papier weitgehend ablösen und immer wieder erneuern. Um diesen Balanceakt beherrschen zu können, verwenden die Papiermacher Haftmittel und Haftmittelmischungen, die häufig noch mit Trennmitteln (release agents) kombiniert werden.

Beispiele für bekannte Haftmittel, die entweder auf den Trockenzylinder oder auf die Papierbahn aufgebracht werden und die gegebenenfalls noch andere Haftmittel, Verankerungsmittel oder Trennmittel enthalten, sind Polyvinylalkohole, Copolymere aus Ethylen und Vinylacetat, Polyvinylacetat, Polyacrylate und wärmehärtbare, kationische Polyamidoaminharze. Bei den zuletzt genannten Harzen handelt es sich um thermisch härtbare Kondensationsprodukte aus einem Polyamidoamin und Epichlorhydrin, die noch reaktive Gruppen enthalten, die beispielsweise beim Erhitzen auf höhere Temperaturen vernetzen. Solche Harze werden beispielsweise als sogenannte Nassfestmittel bei der Herstellung von Tissuepapier verwendet werden. Als Krepphilfsmittel sind sie jedoch wegen ihrer Reaktionsfähigkeit nicht einfach zu handhaben, weil der Polymerüberzug auf dem Kreppzylinder häufig unregelmäßig, hart und spröde wird , so daß es bei der Papierherstellung zu Produktions- und Qualitätsproblemen kommt. Da die Nassfestharze eine relativ hohe Konzentration an Chloridionen aufweisen, kann es bei ihrem Einsatz als Krepphilfsmittel zu einer merklichen Korrosion des Kreppzylinders kommen. Häufig werden auch wasserlösliche anorganische Phosphate als zusätzliche Verankerungsmittel eingesetzt.

Bei dem aus der EP-A-0 856 083 bekannten Verfahren zum Kreppen von Papier werden mit Epichlorhydrin vernetzte, wasserlösliche, thermisch nicht härtbare Polyamidoamine oder modifizierte Polyamidoamine in Form von wässrigen Lösungen direkt auf die Oberfläche einer Krepptrommel als Haftvermittler aufgebracht.

Die aus der US-A-5,602,209 bekannten Haftvermittler für das Kreppen von Papier enthalten 1 bis 25 Gew.-% Polyoxazolin und ein Polyamidoamin-Epichlorhydrin-Harz. Polyoxazolin kann jedoch auch mit anderen Polymeren kombiniert werden, z.B. mit Polyvinylamiden, Polyvinylalkoholen, glyoxylierten Polyvinylamiden, Polyethylenoxid, Polyethylenimin, Polyvinylpyrrolidon und Carbowax® Polyethylenglykolen. Wie aus den Beispielen hervorgeht, ist die Wirksamkeit von Kombinationen aus Polyoxazolin und einem Polyamidoamin höher als die Wirksamkeit der einzelnen Polymeren.

Aus US 5,980,690 A ist eine Krepphilfsmittelmischung bekannt, die aus einem Oxazolin Polymer, einem Polyethylenimin und einem modifizierten Polyethylenimin besteht. Diese Krepphilfsmittelmischung liegt als Konzentrat vor und wird vor dem Auftragen auf den Kreppzylinder mit Wasser verdünnt.

Der vorliegenden Erfindung liegt die Aufgabe zugrunde, weitere Haftvermittler für das Kreppen von Papier zur Verfügung zu stellen.

Die Aufgabe wird erfindungsgemäß gelöst mit einem Verfahren zur Herstellung von gekrepptem Papier durch Ankleben einer Papierbahn mit Hilfe eines organischen synthetischen Polymeren oder dieses enthaltende Mischungen an einen Kreppzylinder, Stauchen und Abnehmen des gekreppten Papiers vom Kreppzylinder, wenn man als organisches synthetisches Polymer
(ii) Umsetzungsprodukte von Polyethylenimin einer Molmasse M_{w} von 500 bis 1 Million mit mindestens einem C₁₄- bis C₂₂-Alkyldiketen, einer Monocarbonsäure, einem Ester einer Monocarbonsäure oder einem Säurechlorid einer Monocarbonsäure und/oder
(iii) Umsetzungsprodukte von Polyalkylenpolyaminen mit einer Molmasse von 300 bis 1 Million mit mindestens einem Bischlorhydrinether oder Bisglycidylether eines Polyalkylenglykols mit einem Molekulargewicht M_{N} von 300 bis 3000
einsetzt.

Als Krepphilfsmittel geeignete modifizierte Polyethylenimine (ii) kommen Umsetzungsprodukte von Polyethylenimin einer Molmasse M_{w} von 500 bis 1 Million mit mindestens einem C₁₄- bis C₂₂-Alkyldiketen, einer Monocarbonsäure, einem Ester einer Monocarbonsäure oder einem Säurechlorid einer Monocarbonsäure in Betracht. Bei diesen Umsetzungsprodukten handelt es sich im Wesentlichen um unvernetzte, partiell oder vollständig amidierte Polyethylenimine. Bei der Umsetzung erfolgt lediglich eine Amidierung von primären oder sekundären NH-Gruppen im Polyethylenimin und keine Verknüpfung von Polyethyleniminmolekülen. Produkte dieser Art sind beispielsweise aus der WO-A-94/12560 und der WO-A-98/50630 bekannt. Während sie nach dem Stand der Technik einem störstoffhaltigen Papierstoff als Fixiermittel vor der Blattbildung zugesetzt werden, verwendet man sie erfindungsgemäß als Krepphilfsmittel. Sie werden durch Reaktion von Polyethylenimin mit Alkyldiketenen wie Stearyldiketen, Palmityldiketen, Behenyldiketen und/oder Oleyldiketen in wässrigem Medium bei Temperaturen von beispielsweise 20 bis 100°C, vorzugsweise bei 40 bis 70°C hergestellt, wobei man z.B. 1 Gew.-Teil Polyethylenimin mit 0,001 bis 0,05, vorzugsweise 0,002 bis 0,02 Gew.-Teilen mindestens eines Alkyldiketens umsetzt. Anstelle von Alkyldiketenen kann man mindestens eine C₁- bis C₂₂-Monocarbonsäure, mindestens einen Ester einer solchen Monocarbonsäure mit einem einwertigen C₁- bis C₂₂-Alkohol oder mindestens ein Säurechlorid einer C₁- bis C₂₂-Monocarbonsäure verwenden. Die Polyethylenimine können sowohl in Form der freien Basen als auch als Salze mit Mineralsäuren oder organischen Säuren eingesetzt werden. Bevorzugt eingesetzte Haftmittel (ii) sind Umsetzungsprodukte von Polyethylenimin einer Molmasse M_{w} von 500 bis 1 Million mit mindestens einem C₁₄- bis C₂₂-Alkyldiketen.

Als Krepphilfsmittel (iii) kommen Umsetzungsprodukte von Polyalkylenpolyaminen, vorzugsweise Polyethyleniminen, mit einer Molmasse von 300 bis 1 Million mit mindestens einem Bischlorhydrinether oder Bisglycidylether eines Polyalkylenglykols mit einem Molekulargewicht M_{N} von 300 bis 3000 in Betracht. Die Umsetzung erfolgt in wässriger Lösung bei Temperaturen bis zu 100°C, vorzugsweise bei 70 bis 95°C. Pro Gew.-Teil Polyalkylenpolyamin setzt man beispielsweise 0,005 bis 0,10, vorzugsweise 0,01 bis 0,05 Gew.-Teile Bischlorhydrin- oder Bisglycidylether ein. Solche Umsetzungsprodukte sind beispielsweise aus der DE-A-24 36 386 bekannt. Als Polyalkylenpolyamin kommt vorzugsweise Polyethylenimin mit einem Molekulargewicht M_{w} von 500 bis 750 000 in Betracht. Die zugrundeliegenden Polyalkylenglykole leiten sich vorzugsweise von Polyethylenglykolen eines Molgewichts M_{N} von 300 bis 3 000, insbesondere 500 bis 1750 ab. Anstelle von Polyethylenglykol kann man als Polyalkylenglykole auch Blockcopolymerisate aus Ethylenglykol und Propylenglykol einsetzen. Die Polyalkylenglykole werden beispielsweise durch Umsetzung mit Epichlorhydrin im Molverhältnis von mindestens 1 : 2 in die entsprechenden Bischlorhydrinether bzw. Bisglycidylverbindungen überführt. Die Kondensationsprodukte (iii) aus Polyalkylenpolyaminen und mindestens einem Bischlorhydrin- oder Bisglycidylether von Polyalkylenglykolen haben beispielsweise Molmassen M_{w} von 100 000 bis 4 Millionen, vorzugsweise 300 000 bis 3 Millionen. Auch bei den modifizierten Polyethyleniminen haben die Polymeren mit einer höheren Molmasse gegenüber den Polymeren mit einer niedrigeren Molmasse die höhere Klebkraft.

Die oben beschriebenen Haftmittel, die erfindungsgemäß als Krepphilfsmittel eingesetzt werden, werden üblicherweise in 0,5 bis 15, meistens 2 bis 5 gew.-%igen wässrigen Lösungen oder Mischungen verwendet. Die Handelsprodukte, die eine Polymerkonzentration von beispielsweise 15 bis 25 Gew.-% haben, werden vor der Anwendung als Haftmittel im Kreppvorgang durch Zusatz von Wasser verdünnt oder in die Mischungen eingearbeitet. Der pH-Wert der gebrauchsfertigen wässrigen Polymerlösungen beträgt beispielsweise 4 bis 12, vorzugsweise 6 bis 9.

Gegenstand der Erfindung ist außerdem die Verwendung von
(ii) Umsetzungsprodukten von Polyethylenimin einer Molmasse M_{w} von 500 bis 1 Million mit mindestens einem C₁₄- bis C₂₂-Alkyldiketen, einer Monocarbonsäure, einem Ester einer Monocarbonsäure oder einem Säurechlorid einer Monocarbonsäure und/oder
(iii) Umsetzungsprodukten von Polyalkylenpolyaminen mit einer Molmasse von 300 bis 1 Million mit mindestens einem Bischlorhydrinether oder Bisglycidylether eines Polyalkylenglykols mit einem Molekulargewicht M_{N} von 300 bis 3000
als Krepphilfsmittel.

Die erfindungsgemäß zu verwendenden Haftmittel können nicht nur als einzelne Komponenten, sondern auch in Gemischen miteinander eingesetzt werden. Sie können aber auch in Gemischen mit bekannten Haftmitteln, wie z. B. mit den oben erwähnten Polyvinylalkoholen, Copolymeren aus Ethylen und Vinylacetat, Polyvinylacetat, Polyamidoaminen, Poly(meth)acrylaten und Polyacrylsäuren und Polymethacrylsäuren gemischt werden, sowie mit weiteren Additiven, sofern die Produkte sich in den Mischungen vertragen und sich nicht gegenseitig coagulieren. Auch die Mischung der erfindungsgemäßen Haftmittel und ihrer Mischungen mit Trennmitteln zur besseren Steuerung der Haftung am Kreppzylinder ist möglich, ebenso wie die Einmischung eines zusätzlichen Haftvermittlers.

Die erfindungsgemäß als Krepphilfsmittel anzuwendenden Polymeren (ii) bis (iii) können beispielsweise innerhalb des Papierherstellungsprozesses auf die nasse Papierbahn aufgesprüht oder auf den Kreppzylinder aufgetragen werden. Es ist jedoch auch möglich, ein getrocknetes Papier nachträglich einem Kreppvorgang zu unterwerfen. Dazu wird das trockene Papier entweder zunächst mit Wasser befeuchtet (z.B. auf einen Feuchtegehalt von ca. 5 bis 20 Gew.-%) oder direkt mit einer erfindungsgemäß zu verwendenden wässrigen Lösung eines Haftvermittlers (ii) bis (iii) besprüht. Vorzugsweise, z. B. in modernen TAD-Maschinen, wird das Papier trocken auf den Zylinder aufgeführt, der seinerseits mit dem Haftmittel besprüht wird. Die Auftragsmenge kann beispielsweise pro Quadratmeter Papier zwischen 2 mg und 250 mg, vorzugsweise 2 mg und 50 mg betragen. Die Temperatur des Kreppzylinders beträgt beispielsweise 100 bis 150°C, meistens 125 bis 145°C.

Die oben beschriebenen Haftmittel (ii) bis (iii) können entweder allein oder in Mischung untereinander als Krepphilfsmittel eingesetzt werden. Es ist jedoch auch möglich, sie in Mischung mit bekannten Krepphilfsmitteln zu verwenden. Solche Mischungen können beispielsweise 10 bis 90, vorzugsweise 20 bis 70 Gew.-% mindestens eines der folgenden Polymeren enthalten: Polyvinylalkohol, Copolymere aus Ethylen und Vinylacetat, Polyvinylacetat, Polyamidoamine, Polyacrylate, Polymethacrylate, Polyacrylsäure und Polymethacrylsäure. Die genannten Polymeren und gegebenenfalls weitere Additive wie Trennmittel oder Verankerungsmittel, sind vor Herstellung der Mischungen auf ihre Verträglichkeit mit den erfindungsgemäß einzusetzenden Haftmitteln zu prüfen, damit sich die Mischungskomponenten nicht gegenseitig koagulieren. Geeignete Trennmittel sind beispielsweise Mineralöle und oberflächenaktive Verbindungen, die zusätzlich einen weichmachenden Effekt auf das Papier ausüben. Verankerungsmittel sind beispielsweise wasserlösliche anorganische Phosphate.

Die Prozentangaben in den Beispielen bedeuten Gewichtsprozent.

### Beispiel 1

Auf einer Papiermaschine wurde Toilettenkrepp mit einem Flächengewicht von ca. 25 g/m² auf der Basis von deinktem Altpapier hergestellt. Als Haftmittel wurden kontinuierlich, pro Quadratmeter Papier, 0,35 g einer 10 %igen wäßrigen Lösung eines mit Ameisensäure neutralisierten Umsetzungsprodukts aus Polyethylenimin der Molmasse M_{w} 600 000 mit einem Bischlorhydrinether der Molmasse M_{N} 1500 mit Hilfe eines Sprühbalkens auf den Kreppzylinder aufgesprüht. Die Kreppung des Papiers verlief problemlos. Im Beobachtungszeitraum von 2 Tagen wurden keine störenden Ablagerungen und keinerlei Anzeichen von Lochfraß auf dem Kreppzylinder entdeckt. Im Abwasser der Papiermaschine wurden kaum messbare Spuren von organischen Chlorverbindungen, die aus dem verwendeten Altpapier stammten, gefunden.

### Vergleichsbeispiel 1

Beispiel 1 wurde mit der einzigen Ausnahme wiederholt, dass man jetzt als Haftmittel 0,35 g einer 10 %igen wäßrigen Lösung eines Polyamidoamin-Epichlorhydrin-Harzes (Luresin^{®} KNU der Firma BASF Aktiengesellschaft), wie es als Nassfestmittel bekannt ist, mit Hilfe eines Sprühbalkens auf den Kreppzylinder aufsprühte. Auf dem Kreppzylinder bildeten sich bereits nach kurzer Zeit störende Ablagerungen, so dass die Papierproduktion unterbrochen werden und der Kreppzylinder nachgeschliffen werden musste. Außerdem gelangten durch die Rückführung des Produktionsausschusses, der Randabschnitte und sonstiger Verarbeitungsreste organische Chlorverbindungen in den Wasserkreislauf der Papiermaschine.

## Patentansprüche

1. Verfahren zur Herstellung von gekrepptem Papier durch Ankleben einer Papierbahn mit Hilfe eines organischen synthetischen Polymers als Haftmittel an einen Kreppzylinder, Stauchen und Abnehmen des gekreppten Papiers vom Kreppzylinder, **dadurch gekennzeichnet, dass** man als organisches synthetisches Polymer
(ii) Umsetzungsprodukte von Polyethylenimin einer Molmasse M_{w} von 500 bis 1 Million mit mindestens einem C₁₄- bis C₂₂-Alkyldiketen, einer Monocarbonsäure, einem Ester einer Monocarbonsäure oder einem Säurechlorid einer Monocarbonsäure und/oder
(iii) Umsetzungsprodukte von Polyalkylenpolyaminen mit einer Molmasse von 300 bis 1 Million mit mindestens einem Bischlorhydrinether oder Bisglycidylether eines Polyalkylenglykols mit einem Molekulargewicht M_{N} von 300 bis 3000
einsetzt.

2. Verfahren nach Anspruch 1, **dadurch gekennzeichnet, dass** man als Haftmittel (ii) Umsetzungsprodukte von Polyethylenimin einer Molmasse M_{w} von 500 bis 1 Million mit mindestens einem C₁₄- bis C₂₂-Alkyldiketen einsetzt.

3. Verfahren nach Anspruch 1 oder 2, **dadurch gekennzeichnet, dass** man als Haftmittel (ii) Umsetzungsprodukte von 1 Gew.-Teil Polyethylenimin mit 0,001 bis 0,05 Gew.-Teilen mindestens eines Alkyldiketens einsetzt.

4. Verfahren nach Anspruch 1 , **dadurch gekennzeichnet, dass** man als Haftmittel (iii) Umsetzungsprodukte aus Polyethyleniminen mit einer Molmasse von 300 bis 1 Million mit mindestens einem Bischlorhydrinether oder Bisglycidylether eines Polyalkylenglykols mit einem Molekulargewicht M_{N} von 300 bis 3000 einsetzt.

5. Verfahren nach einem der Ansprüche 1 und 4, **dadurch gekennzeichnet, daß** man als Haftmittel (iii) Umsetzungsprodukte aus Polyethyleniminen mit einer Molmasse von 300 bis 1 Million mit mindestens einem Bischlorhydrinether oder Bisglycidylether eines Polyethylenglykols mit einem Molekulargewicht M_{N} von 500 bis 1750 einsetzt.

6. Verfahren nach einem der Ansprüche 1 bis 5, **dadurch gekennzeichnet, dass** man die Haftmittel (ii) bis (iii) in Mischung mit mindestens einem organischen synthetischen Polymeren aus der Gruppe der Polyvinylalkohole, Copolymere aus Ethylen und Vinylacetat, Polyvinylacetat, Polyamidoamine, Poly(meth)acrylate und Polyacrylsäuren und Polymethacrylsäuren einsetzt.

7. Verfahren nach einem der Ansprüche 1 bis 6, **dadurch gekennzeichnet, dass** die Haftmittel ein Trennmittel enthalten.

8. Verfahren nach einem der Ansprüche 1 bis 7, **dadurch gekennzeichnet, dass** man pro Quadratmeter Papier 2 bis 250 mg mindestens eines Haftmittels (i), (ii) und/oder (iii) einsetzt.

9. Verwendung von
(ii) Umsetzungsprodukten von Polyethylenimin einer Molmasse M_{w} von 500 bis 1 Million mit mindestens einem C₁₄- bis C₂₂-Alkyldiketen, einer Monocarbonsäure, einem Ester einer Monocarbonsäure oder einem Säurechlorid einer Monocarbonsäure und/oder
(iii) Umsetzungsprodukten von Polyalkylenpolyaminen mit einer Molmasse von 300 bis 1 Million mit mindestens einem Bischlorhydrinether oder Bisglycidylether eines Polyalkylenglykols mit einem Molekulargewicht M_{N} von 300 bis 3000
als Krepphilfsmittel.

## Claims

1. A process for the production of crepe paper by adhesive bonding of a paper web with the aid of an organic synthetic polymer as an adhesive to a creping cylinder, compression and removal of the crepe paper from the creping cylinder, wherein the organic synthetic polymer used is
(ii) reaction products of polyethyleneimine having a molar mass M_{w} of from 500 to 1 million with at least one C₁₄- to C₂₂-alkyldiketene, a monocarboxylic acid, an ester of a monocarboxylic acid or an acid chloride of a monocarboxylic acid and/or
(iii) reaction products of polyalkylenepolyamines having a molar mass of from 300 to 1 million with at least one bischlorohydrin ether or bisglycidyl ether of a polyalkylene glycol having a molecular weight M_{N} of from 300 to 3000.

2. The process according to claim 1, wherein reaction products of polyethyleneimine having a molar mass M_{w} of from 500 to 1 million with at least one C₁₄- to C₂₂-alkyldiketene are used as the adhesive (ii).

3. The process according to claim 1 or 2, wherein reaction products of 1 part by weight of polyethyleneimine with from 0.001 to 0.05 part by weight of at least one alkyldiketene are used as the adhesive (ii).

4. The process according to claim 1, wherein reaction products of polyethyleneimines having a molar mass of from 300 to 1 million with at least one bischlorohydrin ether or bisglycidyl ether of a polyalkylene glycol having a molecular weight M_{N} of from 300 to 3000 are used as the adhesive (iii).

5. The process according to any of claims 1 to 4, wherein reaction products of polyethyleneimines having a molar mass of from 300 to 1 million with at least one bischlorohydrin ether or bisglycidyl ether of a polyethylene glycol having a molecular weight M_{N} of from 500 to 1750 are used as the adhesive (iii).

6. The process according to any of claims 1 to 5, wherein adhesives (ii) to (iii) are used as a mixture of at least one organic synthetic polymer from the group consisting of polyvinyl alcohols, copolymers of ethylene and vinyl acetate, polyvinyl acetate, polyamidoamines, poly(meth)acrylates and polyacrylic acids and polymethacrylic acids.

7. The process according to any of claims 1 to 6, wherein the adhesives comprise a release agent.

8. The process according to any of claims 1 to 7, wherein from 2 to 250 mg of at least one adhesive (ii) and/or (iii) are used per square meter of paper.

9. The use of
(ii) reaction products of polyethyleneimine having a molar mass of M_{w} of from 500 to 1 million with at least one C₁₄- to C₂₂-alkyldiketene, a monocarboxylic acid, an ester of a monocarboxylic acid or an acid chloride of a monocarboxylic acid and/or
(iii) reaction products of polyalkylenepolyamines having a molar mass of from 300 to 1 million with at least one bischlorohydrin ether or bisglycidyl ether or a polyalkylene glycol having a molecular weight M_{N} of from 300 to 3000
as creping assistants.

## Revendications

1. Procédé pour la préparation de papier crépon par collage d'une bande de papier à l'aide d'un polymère synthétique organique comme adhésif sur un cylindre de crêpage, refoulement et prélèvement du papier crépon du cylindre de crêpage, **caractérisé en ce qu'**on utilise, comme polymère synthétique organique
(ii) des produits de transformation de polyéthylène-imine d'une masse molaire M_{w} de 500 à 1 million avec au moins un C₁₄-C₂₂-alkyldicétène, un acide monocarboxylique, un ester d'un acide monocarboxylique ou un chlorure d'un acide monocarboxylique et/ou
(iii) des produits de transformation de polyalkylène-polyamines présentant une masse molaire de 300 à 1 million avec au moins un bischlorhydrinéther ou un bisglycidyléther d'un polyalkylèneglycol présentant un poids moléculaire M_{N} de 300 à 3000.

2. Procédé selon la revendication 1, **caractérisé en ce qu'**on utilise comme adhésif (ii) des produits de transformation de polyéthylène-imine d'une masse molaire M_{w} de 500 à 1 million avec au moins un C₁₄-C₂₂-alkyldicétène.

3. Procédé selon la revendication 1 ou 2, **caractérisé en ce qu'**on utilise comme adhésif (ii) des produits de transformation de 1 partie en poids de polyéthylène-imine avec 0,001 à 0,05 partie en poids d'au moins un alkyldicétène.

4. Procédé selon la revendication 1, **caractérisé en ce qu'**on utilise comme adhésif (iii) des produits de transformation de polyéthylène-imines présentant une masse molaire de 300 à 1 million avec au moins un bischlorhydrinéther ou un bisglycidyléther d'un polyalkylèneglycol présentant un poids moléculaire M_{N} de 300 à 3000.

5. Procédé selon l'une quelconque des revendications 1 et 4, **caractérisé en ce qu'**on utilise comme adhésif (iii) des produits de transformation de polyéthylène-imines présentant une masse molaire de 300 à 1 million avec au moins un bischlorhydrinéther ou un bisglycidyléther d'un polyéthylèneglycol présentant un poids moléculaire M_{N} de 500 à 1750.

6. Procédé selon l'une quelconque des revendications 1 à 5, **caractérisé en ce qu'**on utilise les adhésifs (ii) à (iii) en mélange avec au moins un polymère synthétique organique du groupe des poly(alcools vinyliques), des copolymères d'éthylène et d'acétate de vinyle, des poly(acétates de vinyle), des polyamidoamines, des poly(méth)acrylates et des poly(acides acryliques) et des poly(acides méthacryliques).

7. Procédé selon l'une quelconque des revendications 1 à 6, **caractérisé en ce que** les adhésifs contiennent un agent de démoulage.

8. Procédé selon l'une quelconque des revendications 1 à 7, **caractérisé en ce qu'**on utilise, par mètre carré de papier, 2 à 250 mg d'au moins un adhésif (ii) et/ou (iii).

9. Utilisation
(ii) de produits de transformation de polyéthylène-imine d'une masse molaire M_{w} de 500 à 1 million avec au moins un C₁₄-C₂₂-alkyldicétène, un acide monocarboxylique, un ester d'un acide monocarboxylique ou un chlorure d'un acide monocarboxylique et/ou
(iii) de produits de transformation de polyalkylène-polyamines présentant une masse molaire de 300 à 1 million avec au moins un bischlorhydrinéther ou un bisglycidyléther d'un polyalkylèneglycol présentant un poids moléculaire M_{N} de 300 à 3000 comme adjuvant de crêpage.
